# EUROPÄISCHE PATENTSCHRIFT

(11) **EP 4 274 769 B1**
(45) Veröffentlichungstag und Bekanntmachung des Hinweises auf die Patenterteilung: **11.12.2024**
(21) Anmeldenummer: 21843973.5
(22) Anmeldetag: 22.12.2021
(51) Int. Cl.: B60S 13/00, B60P 3/12, A62C 3/00, B66F 19/00

(54) **VORRICHTUNG ZUR BERGUNG EINES KRAFTFAHRZEUGS**
DEVICE FOR SALVAGING A MOTOR VEHICLE
DISPOSITIF DE RÉCUPÉRATION D'UN VÉHICULE AUTOMOBILE

(30) Priorität: 07.01.2021 DE 102021100136
(43) Veröffentlichungstag der Anmeldung: 15.11.2023
(73) Patentinhaber: Castellan AG, 57223 Kreuztal (DE)
(72) Erfinder: CASTELLAN, Stefan Hans-Georg, 57223 Kreuztal (DE)
(74) Vertreter: Klüppel, Walter
(86) Internationale Anmeldenummer: PCT/EP2021/087217
(87) Internationale Veröffentlichungsnummer: WO 2022/148652

(56) Entgegenhaltungen:
- AU-A1- 2009 230 812
- US-B2- 10 590 669

## Beschreibung

Die Erfindung betrifft eine Vorrichtung zur Bergung eines verunfallten, insbesondere brennenden Kraftfahrzeugs aus einer Gefahrenzone. Derartige Vorrichtungen werden bei havarierten und brennenden Kraftfahrzeugen, insbesondere Elektro- oder Hybridfahrzeugen, eingesetzt, damit sie von den Rettungskräften sicher und möglichst gefahrlos aus einem, ggf. mit Löschgeräten nicht zugänglichen, Gefahrenbereich gezogen werden können, so dass anschließend beispielsweise der Brand gelöscht werden kann.

Unter dem Begriff "havariert" wird insbesondere verstanden, dass das Kraftfahrzeug derart schwer beschädigt und/oder in einer Weise unbrauchbar geworden ist, dass es nicht mehr einfach verlagerbar ist, beispielsweise nach einem Unfall, durch mechanische Beschädigung und/oder insbesondere durch Brand.

In der DE 10 2016 211 854 B3 wurde ein Behälter zum Bergen havarierter Elektro-oder Hybridfahrzeuge vorgeschlagen, der als ein Wechselbehälter, ein sogenannter Abrollbehälter, ausgebildet ist. Diesen Abrollbehälter kann ein Wechselladerfahrzeug aufnehmen und zur Einsatzstelle transportieren. Über eine seitliche Öffnung kann ein brennendes Kraftfahrzeug mittels einer Seilwinde in den Abrollbehälter gezogen werden, deren endseitiges Hakenelement in ein ösenartiges Anschlagmittel eines um das brennende Kraftfahrzeug gelegten Zurrgurtes eingreift. Nach dem Verschließen der Öffnung wird in den Abrollbehälter Kühl- bzw. Löschmittel eingeführt, so dass das Kraftfahrzeug geflutet wird, damit das Feuer gelöscht und der defekte Akkumulator gekühlt werden kann, bis ein Selbstentzünden nicht mehr möglich ist. Als Kühl-und/oder Löschmittel wird normales Löschwasser verwendet.

Ein derartiger Abrollbehälter ist jedoch sehr voluminös und benötigt zum Abstellen mittels eines Wechselladerfahrzeugs viel Platz, so dass er nicht überall und insbesondere nicht in Gebäuden wie beispielsweise Parkhäusern oder Werkstätten einsetzbar ist. Bei seinem Einsatz und insbesondere beim Anlegen des Zurrgurtes um das brennende Kraftfahrzeug muss die Rettungskraft sich sehr nah an den Einsatzort heranbewegen. Dies stellt nicht zuletzt aus Sicherheitsgründen ein Risiko für die betroffenen Personen dar.

Die DE 10 2017 010 960 A1 offenbart eine Vorrichtung zum Bergen havarierter Elektrofahrzeuge, bei der havarierte Kraftfahrzeuge mittels einer Lade-Einrichtung in einen Behälter gezogen werden. Dabei lässt sich der Behälter mittels einer Verlagerungseinrichtung auf das havarierte Kraftfahrzeug zubewegen. Dadurch kann mittels der Ladeeinrichtung ein havariertes Kraftfahrzeug autonom und insbesondere automatisiert in den Behälter verlagert werden. Die Lade-Einrichtung kann eine Seilwinde mit einer Greifvorrichtung sein.

Die Seilwinde kann zum Beispiel an der Abschleppöse eines Kraftfahrzeugs angebracht werden, was äußerst gefährlich sein kann, da die Rettungskraft bis zum eventuell brennenden Kraftfahrzeug vordringen und dort den Haken der Winde einhängen muss. Gemäß der EP 3 263 402 A1 können aber auch Zurrgurte um das Kraftfahrzeug gelegt werden, an denen dann die Seilwinde eingehängt wird. Dies kann jedoch insbesondere bei einem brennenden Kraftfahrzeug lebensgefährlich sein.

Die Druckschriften AU 2009 230 812 A1 und US 10,590,669 B2 offenbaren jeweils ein Bergungsfahrzeug zur Bergung von Fahrzeugen von einer Unfallstelle.

Die Erfindung geht von der Aufgabe aus, eine Vorrichtung der eingangs genannten Art derart auszubilden, dass sie eine einfache und sichere Bergung eines verunfallten, insbesondere brennenden Kraftfahrzeugs mit genügendem Abstand der Rettungskräfte zur Gefahrenquelle ermöglicht.

Die Aufgabe wird erfindungsgemäß für eine Vorrichtung der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass die Vorrichtung einen ausfahrbaren Teleskopzylinder aufweist, an dessen Spitze eine mit Rädern oder Rollen versehene verfahrbare Plattform angeordnet ist, dass die Plattform wenigstens einen aus einer Ruhestellung in eine Raststellung bewegbarer Mitnehmer haltert, und dass der Mitnehmer im Bereich des Kraftfahrzeugs fernbetätigt in die Raststellung bringbar ist, so dass das Kraftfahrzeug beim Zurückziehen der Vorrichtung mitgenommen wird.

Dadurch lässt sich erreichen, dass die Rettungskräfte bei der Bergung einen großen Abstand zum brennenden Kraftfahrzeug einnehmen können, von dort den Teleskopzylinder ausfahren können, den Mitnehmer fernbetätigt am Fahrzeug arretieren können und durch Zurückziehen des Teleskopzylinders das Kraftfahrzeug aus der Gefahrenzone ziehen können.

Entlang des Teleskopzylinders ist eine Betätigungsvorrichtung zum Betätigen des wenigstens einen Mitnehmers angeordnet. Die Betätigungsvorrichtung ist ein Seilzug und an dem Seilzug ist ein Betätigungsmittel angebracht; dadurch wird die Benutzung vereinfacht.

Vorteilhaft ist, dass das Kraftfahrzeug von der Plattform unterfahrbar ist, und dass als Mitnehmer ein, mittels eines Scharniers an der Plattform von seiner liegenden Ruhestellung in eine aufstehende Raststellung bewegbarer Bolzen vorgesehen ist.

Nachdem die Plattform das Kraftfahrzeug unterfahren hat lässt sich der zunächst auf der Plattform liegende Bolzen fernbetätigt aufstellen. Beim Zurückziehen der Plattform nimmt der nunmehr aufstehende Bolzen das Kraftfahrzeug mit.

Es hat sich bewährt, dass der wenigstens eine Mitnehmer mittels wenigstens einer Feder aus der Ruhestellung bewegbar ist.

Dazu ist eine Fernentriegelung vorgesehen. Denkbar ist aber auch, dass die Feder den Bolzen stets versucht aufrecht zu stellen. Beim Unterfahren des Kraftfahrzeuges würde der Bolzen dann vom Kraftfahrzeug gegen die Federkraft auf die Plattform zu geschwenkt. Sobald der Bolzen wieder aufrecht steht könnte die Plattform zurückgezogen werden. Das könnte nicht erst nach vollständigem Unterfahren des Kraftfahrzeugs passieren, sondern auch schon, wenn der Bolzen in einem Hohlraum unter dem Fahrzeug zum Aufstellen kommt.

Von Vorteil ist aber auch, wenn eine fernbetätigbare Verrieglungsvorrichtung den wenigstens einen Mitnehmer in der Ruhestellung bzw. in der Raststellung hält.

Alternativ kann als Mitnehmer eine, mittels eines Gelenks an der Plattform von seiner geöffneten Ruhestellung in eine geschlossene Raststellung bewegbarer Zange bzw. Klaue vorgesehen sein.

Die Klaue kann z.B. im Bereich mindestens eines Rades des Kraftfahrzeuges derart geschlossen werden, dass die Zugkraft an der Vorrichtung über die Zange in das Kraftfahrzeug eingeleitet werden kann, so dass das Kraftfahrzeug aus dem Gefahrenbereich ziehbar ist.

Vorteilhaft ist, dass der Teleskopzylinder mit Tragegriffen zum Transport der Vorrichtung zum Einsatzort versehen ist.

Es hat sich bewährt, dass der Teleskopzylinder einen Anschlussstutzen aufweist, mittels dessen ein Hydraulikschlauch zur Zufuhr eines Hydraulikfluids anschließbar ist.

Dadurch lässt sich der Teleskopzylinder zum Betrieb mit einem hydraulischen Rettungssatz verbinden.

Es hat sich als vorteilhaft erwiesen, dass an dem Ende des Teleskopzylinders eine Zugöse für eine Seilwinde oder einen Mehrzweckzug zum Zurückziehen der Vorrichtung und des Kraftfahrzeugs angebracht ist.

Vorteile können sich auch ergeben, wenn eine Steuerung am hinteren Griffende der Vorrichtung die Flussrichtung des Hydraulikfluids bestimmt. Dadurch lässt sich steuern ob der Teleskopzylinder ausfährt oder sich zusammenzieht.

Die Erfindung ist nachfolgend anhand von in der Zeichnung dargestellten Ausführungsbeispielen näher erläutert. Es zeigen:
- Figur 1: Eine erfindungsgemäße Vorrichtung zur Bergung eines Kraftfahrzeugs im Ruhezustand,
- Figur 2: die erfindungsgemäße Vorrichtung gemäß Figur 1 im Bergungszustand,
- Figur 3: die einsatzbereite Vorrichtung gemäß Figur 1,
- Figur 4: die Vorrichtung gemäß Figur 1 im Einsatz,
- Figuren 5 und 6: zwei Ansichten der Vorrichtung gemäß Figur 1 bereit zum Vorschub,
- Figuren 7 und 8: zwei Ansichten der Vorrichtung gemäß Figur 1 bereit zum Rückzug und Bergevorgang und
- Figur 9: eine alternative Ausführungsform der erfindungsgemäßen Vorrichtung gemäß Figur 1.
- Figuren 10: eine Alternative Ausbildung des Mitnehmers.

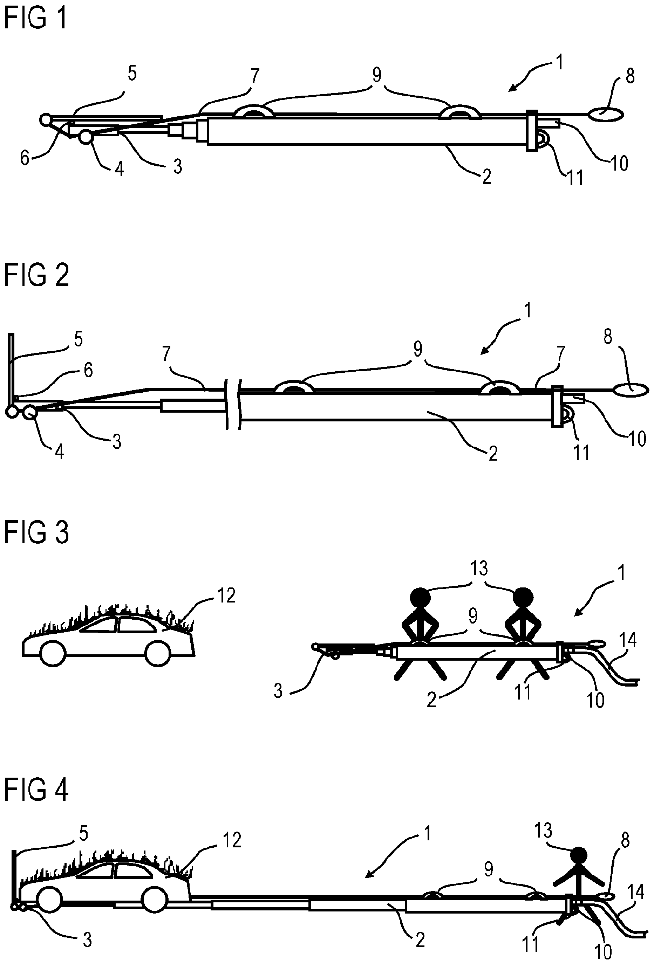

Die Figur 1 zeigt beispielhaft eine Vorrichtung (1) zur Bergung eines havarierten, beispielsweise brennenden Kraftfahrzeugs, im weiteren auch Bergungslanze genannt, die einen Teleskopzylinder 2 in Form eines Teleskoprohres aufweist, der in zusammengeschobenen Zustand dargestellt ist. Der Teleskopzylinder (2) wird bevorzugt hydraulisch, z.B. durch Löschwasser angetrieben. Andere Linearantriebe z.B. ein elektrischer Linearantrieb ist selbstverständlich auch möglich.

An der Spitze des Teleskopzylinders 2 ist eine Plattform 3 angebracht, die in Form eines Wagens oder Schlittens ausgebildet sein kann. Die Plattform 3 ist in Figur 1 mit Rädern oder Rollen 4 zum leichteren Transport und Verschieben versehen. An der Plattform 3 sind Widerhaken oder Mitnehmer 5 mittels eines Scharniers 6 klappbar befestigt. Im dargestellten Falle sind die Mitnehmer 5 zusammengeklappt, liegend, in Ruhestellung dargestellt. Am kurzen Ende der Mitnehmer 5 ist eine Betätigungsvorrichtung in Form eines Seilzugs 7 befestigt, der mittels Umlenkungen entlang des Teleskopzylinders 2 verläuft, so dass durch ein Betätigungsmittel 8 die Mitnehmer 5 sich aufrichten, das heißt in Raststellung bringen lassen, wie dies nachfolgend anhand der Figur 2 gezeigt wird. An dem Teleskopzylinder 2 sind oben zwei Tragegriffe 9 für den Transport der Bergungslanze angebracht. Der Teleskopzylinder 2 ist an seinem Ende mit einem Anschlussstutzen 10 versehen, über den eine Hydraulikflüssigkeit, vorzugsweise Wasser wie Löschwasser zuführbar ist. Weiterhin ist an dem Ende des Teleskopzylinders 2 eine Zugöse 11 für eine Seilwinde oder einen Mehrzweckzug zum Zurückziehen der Vorrichtung 1 und des Kraftfahrzeugs 12 angebracht.

In der Figur 2 ist die Vorrichtung 1 bzw. Bergungslanze gemäß Figur 1 ebenfalls in Seitenansicht jedoch im ausgefahrenen Zustand dargestellt, wobei der ausgefahrene Teleskopzylinder 2 zur besseren Darstellung und Vergleich unterbrochen dargestellt ist. In diesem Falle der Arbeitsstellung sind die Mitnehmer 5 in Raststellung, hochgeklappt dargestellt. Dies Raststellung wurde erreicht, indem an dem Betätigungsmittel 8 gezogen wurde, so dass der am Ende des Mitnehmers 5 angreifende Seilzug 7 die Mitnehmer 5 um die Achse des Scharniers 6 in die Vertikale geschwenkt hat.

Anhand der Figuren 3 und 4 wird nun die Funktionsweise der Vorrichtung 1 näher erläutert. Soll nun ein havariertes, beispielsweise brennendes Kraftfahrzeug 12 aus einem Gefahrenbereich gezogen werden, wird die Bergungslanze z.B. von zwei oder mehreren Feuerwehrmännern 13 als Rettungskräfte am Tragegriff 9 in den Bereich des verunfallten Kraftfahrzeugs 12, hier hinter das verunfallte Kraftfahrzeug 12 getragen. Dort wird dann ein Hydraulikschlauch 14 mit dem Anschlussstutzen 10 verbunden, der auf der anderen Seite an eine Pumpe z.B. in einem Feuerwehrfahrzeug angeschlossen ist (nicht dargestellt). Der Teleskopzylinder 2 kann dann vorzugsweise mir im Feuerwehrfahrzeug vorhandenem Löschwasser angetrieben werden.

Der Teleskopzylinder 2 kann aber auch an einen hydraulischen Rettungssatz angeschlossen werden. Der hydraulische Rettungssatz wird von einer Hydraulikpumpe mit hohem Druck angetrieben. Da Pumpe und Arbeitsgeräte voneinander getrennt sind, werden diese durch Hydraulikschläuche verbunden. Die Schläuche befinden sich zur besseren Handhabbarkeit oft auf Haspeln. Optional kann ein Stellteil mit entsprechender Steuerung vorgesehen sein über die ggf. entschieden werden kann, ob die Bergungslanze ausfährt oder einfährt.

Mittels der Flüssigkeit wird der Teleskopzylinder 2 ausgefahren, wobei die Plattform 3 auf den Rollen 4 unter das Kraftfahrzeug 12 geschoben wird, bis dass die als Schwenk-Bolzen ausgebildeten Mitnehmer 5 sich vollständig vor dem brennenden Kraftfahrzeug 12 befinden. Dann werden durch Zug an dem Seilzug 7 durch einen Feuerwehrmann 13 die Mitnehmer 5 aufgerichtet. Anschließend kann beispielsweise durch eine Seilwinde (nicht dargestellt), die in der Zugöse 11 eingehängt wird, die Vorrichtung zurückgezogen werden, wobei die Mitnehmer 5 das brennende Kraftfahrzeug 12 aus dem Gefahrenbereich ziehen.

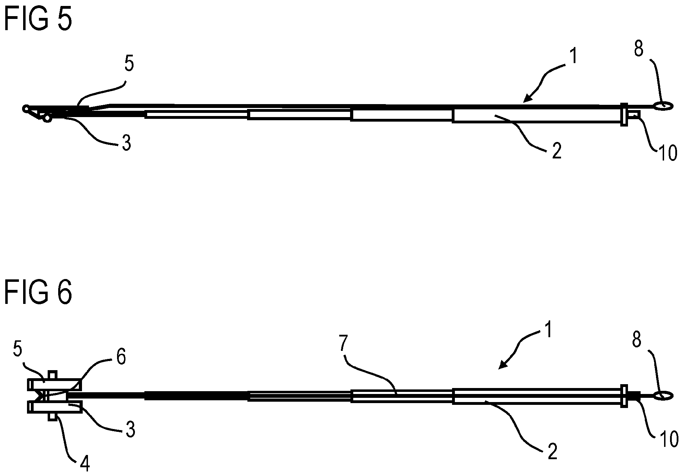

Die Figuren 5 und 6 zeigen die ausgefahrene Vorrichtung 1 komplett in Seitenansicht und Draufsicht bei zusammengeklappten Mitnehmern 5, so dass sie einsatzbereit ist.

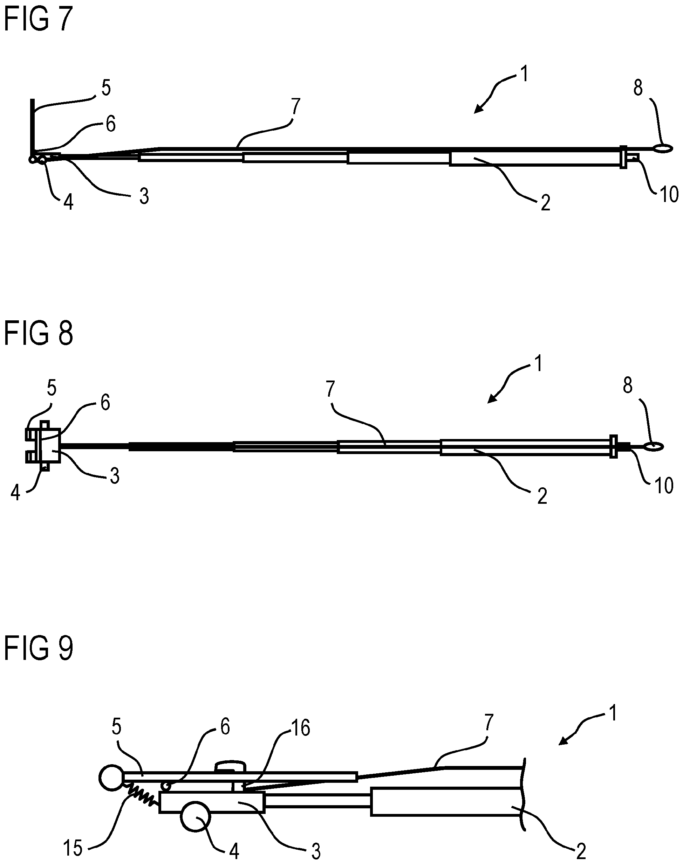

In den Figuren 7 und 8 ist nun die ausgefahrene Vorrichtung 1 komplett in Seitenansicht und Draufsicht bei hochgeklappten, einsatzbereiten Mitnehmern 5 dargestellt, so dass sie das brennende Kraftfahrzeug 12 aus dem Gefahrenbereich ziehen könnte.

Die Figur 9 zeigt eine alternative Ausführungsform der erfindungsgemäßen Vorrichtung, bei der die Plattform 3 mit einer Verriegelungsvorrichtung, beispielsweise einem Verriegelungshaken 16, für die Mitnehmer 5 versehen ist, der die Mitnehmer 5 gegen die Kraft einer Zugfeder 15 in Ruhestellung hält. Auslösen lässt sich die Verriegelungsvorrichtung dann durch den Seilzug 7. Nachdem der Seilzug 7 den Verriegelungshaken 16 entriegelt hat, richten sich gezogen von der gespannten Zugfeder 15 die Mitnehmer 5 auf, so dass dann beim Zurückziehen der Bergungslanze das brennende Kraftfahrzeug 12 mit zurückgezogen wird.

In einer weiteren Ausführungsform können die Mitnehmer 5 von der Zugfeder 15 hochgeklappt gehalten werden. Wird die Plattform 3 unter das brennende Kraftfahrzeug 12 geschoben, werden die Mitnehmer 5 gegen die Kraft der Zugfeder 15 nach unten geklappt. Erst wenn die Plattform 3 unter dem brennenden Kraftfahrzeug 12 hervorkommt, klappen die Mitnehmer 5 wieder nach oben und beim Zurückziehen der Bergungslanze 1 ziehen die Mitnehmer 5 das brennende Kraftfahrzeug 12 mit zurück.

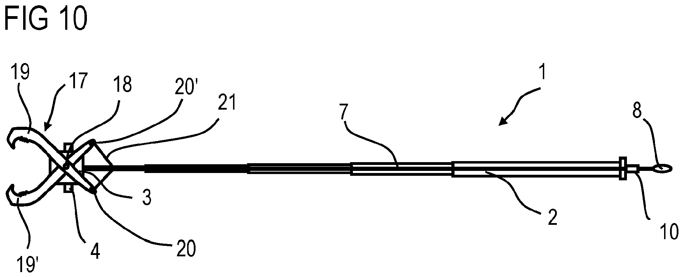

Die Figur 10 zeigt eine alternative Ausbildung des Mitnehmers 5 in Draufsicht. Hier ist an der Spitze der Plattform 3 eine Zange 17 angeordnet, deren Gelenk 18 auf der Plattform 3 festgelegt ist. Die Greifbacken 19, 19` der Zange 17 können sich z.B. an einem Rad des Kraftfahrzeuges festbeißen. Die, den Greifbacken 19, 19' gegenüberliegenden Enden 20, 20' der jeweiligen zweiarmigen Hebel sind über ein Betätigungsseil 21 miteinander verbunden. Mittig am Betätigungsseil greift der Seilzug 7 an.

Wird an dem Betätigungsmittel 8 des Seilzuges 7 gezogen, so verschwenken die Hebel mit den Enden 20, 20' um das Gelenk 18. Gleichzeitig werden die Greifbacken 19, 19' zum Einklemmen des Kraftfahrzeuges 12 bzw. zum Einklemmen von Teilen des Kraftfahrzeuges 12 aufeinander zu geschwenkt. Nachdem die Klemmverbindung mit dem Kraftfahrzeug 12 steht, kann dieses über die Vorrichtung 1 aus dem Gefahrenbereich gezogen werden
Zusammenfassend ist festzustellen, dass durch diese Art der Vorrichtung 1 die Feuerwehrmänner das brennende Kraftfahrzeug 12 gefahrlos bergen können. In großem Abstand zum Gefahrenbereich lässt sich die Bergungslanze durch die Feuerwehrmänner 13 positionieren. Anschließend wird der Teleskopzylinder 2 ausgefahren, so dass die Plattform 3 in den Arbeitsbereich der Mitnehmer 5 im Bereich des Kraftfahrzeugs 12 gefahren werden. Dort werden mittels des Seilzugs 7 die auf der Plattform 3 montierten Mitnehmer 5 betätigt. Dann kann die Vorrichtung 1 zusammen mit dem Kraftfahrzeug 12 zurückgezogen werden. Da die Feuerwehr immer Wasser hat, wird die Teleskope der Bergungslanze 1 vorzugsweise wasserbeaufschlagt betrieben.

### Bezugszeichenliste

- 1: Vorrichtung (Bergungslanze)
- 2: Teleskopzylinder
- 3: Plattform
- 4: Rollen
- 5: Mitnehmer
- 6: Scharnier
- 7: Seilzug
- 8: Betätigungsmittel
- 9: Tragegriffe
- 10: Anschlussstutzen
- 11: Zugöse
- 12: Kraftfahrzeug
- 13: Feuerwehrmänner
- 14: Hydraulikschlauch
- 15: Zugfeder
- 16: Verriegelungshaken
- 17: Zange
- 18: Gelenk
- 19: Greifbacken
- 20: Enden
- 21: Betätigungsseil

## Patentansprüche

1. Vorrichtung (1) zur Bergung eines verunfallten, insbesondere brennenden Kraftfahrzeugs (12) aus einer Gefahrenzone,
wobei die Vorrichtung (1) einen ausfahrbaren Teleskopzylinder (2) aufweist, an dessen Spitze eine mit Rädern oder Rollen (4) versehene verfahrbare Plattform (3) angeordnet ist,
wobei die Plattform (3) wenigstens einen aus einer Ruhestellung in eine Raststellung bewegbarer Mitnehmer (5) haltert,
wobei der Mitnehmer im Bereich des Kraftfahrzeuges (12) fernbetätigt in die Raststellung bringbar ist, so dass das Kraftfahrzeug (12) beim Zurückziehen der Vorrichtung (1) mitgenommen wird; und
wobei entlang des Teleskopzylinders (2) eine Betätigungsvorrichtung zum Betätigen des wenigstens einen Mitnehmers (5) angeordnet ist,
**dadurch gekennzeichnet,**
**dass** die Betätigungsvorrichtung ein Seilzug (7) ist, an dem ein Betätigungsmittel (8) angebracht ist.

2. Vorrichtung (1) nach Anspruch 1,
**dadurch gekennzeichnet,**
**dass** das Kraftfahrzeug (12) von der Plattform (3) unterfahrbar ist, und dass als Mitnehmer (5) ein, mittels eines Scharniers (6) an der Plattform (3) von seiner liegenden Ruhestellung in eine aufstehende Raststellung bewegbarer Bolzen vorgesehen ist.

3. Vorrichtung (1) nach einem der Ansprüche 1 bis 2,
**dadurch gekennzeichnet,**
**dass** der wenigstens eine Mitnehmer (5) mittels wenigstens einer Feder (16) aus der Ruhestellung bewegbar ist.

4. Vorrichtung (1) nach einem der Ansprüche 1 bis 3,
**dadurch gekennzeichnet,**
**dass** eine fernbetätigbare Verrieglungsvorrichtung (15) den wenigstens einen Mitnehmer (5) in der Ruhestellung oder in der Raststellung hält.

5. Vorrichtung (1) nach Anspruch 1,
**dadurch gekennzeichnet**,
als Mitnehmer (5) eine, mittels eines Gelenks (18) an der Plattform (3) von seiner geöffneten Ruhestellung in eine geschlossene Raststellung bewegbarer Zange (17) oder Klaue vorgesehen ist.

6. Vorrichtung (1) nach einem der Ansprüche 1 bis 5,
**dadurch gekennzeichnet,**
**dass** der Teleskopzylinder (2) mit Tragegriffen (9) zum Transport der Vorrichtung (1) zum Einsatzort versehen ist.

7. Vorrichtung (1) nach einem der Ansprüche 1 bis 6,
**dadurch gekennzeichnet,**
**dass** der Teleskopzylinder (2) einen Anschlussstutzen (10) aufweist, mittels dessen ein Hydraulikschlauch (14) zur Zufuhr eines Hydraulikfluids anschließbar ist.

8. Vorrichtung (1) nach einem der Ansprüche 1 bis 7,
**dadurch gekennzeichnet,**
**dass** an dem Ende des Teleskopzylinders (2) eine Zugöse (11) für eine Seilwinde oder einen Mehrzweckzug zum Zurückziehen der Vorrichtung (1) und des Kraftfahrzeugs (12) angebracht ist.

9. Vorrichtung (1) nach einem der Ansprüche 1 bis 8,
**dadurch gekennzeichnet,**
**dass** eine Steuerung am hinteren Griffende der Vorrichtung (1) die Flussrichtung des Hydraulikfluids bestimmt.

## Claims

1. A device (1) for salvaging a motor vehicle (12) that has been involved in an accident, particularly a burning motor vehicle, from a danger zone,
wherein the device (1) comprises an extensible telescopic cylinder (2), on the tip of which a movable platform (3) provided with wheels or rollers (4) is arranged,
wherein at least one carrier (5), which can be moved from an idle position into a detent position, is mounted on the platform (3),
wherein the carrier can be moved into the detent position in the region of the motor vehicle (12) in a remotely controlled manner such that the motor vehicle (12) is towed away as the device (1) is retracted, and
wherein an actuating device for actuating the at least one carrier (5) is arranged along the telescopic cylinder (2),
**characterized in**
**that** the actuating device is a cable pull (7), on which an actuating means (8) is arranged.

2. The device (1) according to claim 1,
**characterized in**
**that** the platform (3) can be moved underneath the motor vehicle (12), and in that the carrier (5) is realized in the form of a stud that can be moved from its horizontal idle position into an upright detent position by means of a hinge (6) on the platform (3).

3. The device (1) according to one of claims 1 to 2,
**characterized in**
**that** the at least one carrier (5) can be moved out of the idle position by means of at least one spring (16) .

4. The device (1) according to one of claims 1 to 3,
**characterized in**
**that** a remotely controllable locking device (15) holds the at least one carrier (5) in the idle position or in the detent position.

5. The device (1) according to claim 1,
**characterized in**
**that** the carrier (5) is realized in the form of a gripper (17) or a claw that can be moved from its open idle position into a closed detent position by means of a joint (18) on the platform (3).

6. The device (1) according to one of claims 1 to 5,
**characterized in**
**that** the telescopic cylinder (2) is provided with carrying handles (9) for transporting the device (1) to the site of operation.

7. The device (1) according to one of claims 1 to 6,
**characterized in**
**that** the telescopic cylinder (2) has a connecting piece (10), by means of which a hydraulic hose (14) for supplying a hydraulic fluid can be connected.

8. The device (1) according to one of claims 1 to 7,
**characterized in**
**that** a cable lug (11) for a cable winch or a multipurpose pulling mechanism for retracting the device (1) and the motor vehicle (12) is arranged on the end of the telescopic cylinder (2).

9. The device (1) according to one of claims 1 to 8,
**characterized in**
**that** a control on the rear handle end of the device (1) determines the flow direction of the hydraulic fluid.

## Revendications

1. Dispositif (1), destiné à récupérer un véhicule automobile (12) accidenté, notamment en feu se trouvant dans une zone dangereuse,
le dispositif (1) comportant un cylindre télescopique (2) déployable, sur la pointe duquel est placée une plateforme (3) munie de roues ou de galets (4),
la plateforme (3) supportant au moins un entraîneur (5) déplaçable d'une position de repos dans une position d'enclenchement,
l'entraîneur étant susceptible d'être amené par télécommande dans la position d'enclenchement dans la zone du véhicule automobile (12), de telle sorte que le véhicule automobile (12) soit entraîné, lorsque l'on tire en arrière le dispositif (1) ; et
le long du cylindre télescopique (2) étant placé un dispositif d'actionnement, destiné à actionner l'au moins un entraîneur (5),
**caractérisé**
**en ce que** le dispositif d'actionnement est un câble de traction (7) sur lequel est monté un moyen d'actionnement (8).

2. Dispositif (1) selon la revendication 1,
**caractérisé**
**en ce que** la plateforme (3) peut passer sous le véhicule automobile (12) et en ce qu'en tant qu'entraîneur (5) est prévu un boulon déplaçable sur la plateforme (3) au moyen d'une charnière (6) de sa position de repos couchée dans une position d'enclenchement debout.

3. Dispositif (1) selon l'une quelconque des revendications 1 à 2,
**caractérisé**
**en ce que** l'au moins un entraîneur (5) est déplaçable à partir de la position de repos au moyen d'au moins un ressort (16).

4. Dispositif (1) selon l'une quelconque des revendications 1 à 3,
**caractérisé**
**en ce qu'**un dispositif de verrouillage (15) télécommandable maintient l'au moins un entraîneur (5) dans la position de repos ou dans la position d'enclenchement.

5. Dispositif (1) selon la revendication 1,
**caractérisé**
**en ce qu'**en tant qu'entraîneur (5) est prévue une pince (17) ou une griffe déplaçable sur la plateforme (3) au moyen d'une articulation (18) de sa position de repos ouverte dans une position d'enclenchement fermée.

6. Dispositif (1) selon l'une quelconque des revendications 1 à 5,
**caractérisé**
**en ce que** le cylindre télescopique (2) est muni de poignées de transport (9), pour le transport du dispositif (1) vers le lieu d'intervention.

7. Dispositif (1) selon l'une quelconque des revendications 1 à 6,
**caractérisé**
**en ce que** le cylindre télescopique (2) comporte une tubulure de raccordement (10), au moyen de laquelle un flexible hydraulique (14) peut se raccorder pour alimenter un fluide hydraulique.

8. Dispositif (1) selon l'une quelconque des revendications 1 à 7,
**caractérisé**
**en ce que** sur l'extrémité du cylindre télescopique (2) est monté un œillet de traction (11) pour un treuil ou un tire-fort polyvalent, destiné à tirer en arrière le dispositif (1) et le véhicule automobile (12).

9. Dispositif (1) selon l'une quelconque des revendications 1 à 8,
**caractérisé**
**en ce qu'**un système de commande sur l'extrémité arrière de la poignée du dispositif (1) détermine le sens de circulation du fluide hydraulique.
